Europäisches Patentamt

European Patent Office

Office européen des brevets

(19)

(11) **EP 1 541 965 A1**

(12) **EUROPEAN PATENT APPLICATION**
published in accordance with Art. 158(3) EPC

(43) Date of publication:
**15.06.2005 Bulletin 2005/24**

(51) Int Cl.[7]: **G01C 19/00**, G01P 9/00,
G01P 15/00, B25J 5/00,
B25J 19/02

(21) Application number: **03765334.2**

(22) Date of filing: **18.07.2003**

(86) International application number:
**PCT/JP2003/009201**

(87) International publication number:
**WO 2004/010081 (29.01.2004 Gazette 2004/05)**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **23.07.2002 JP 2002214401**

(71) Applicant: **National Institute of Advanced
Industrial Science and Technology
Tokyo 100-8921 (JP)**

(72) Inventors:
• **KANEKO, Kenji, c/o National Institute
Tsukuba-shi, Ibaraki 305-8568 (JP)**

• **KANEHIRO, Fumio, c/o National Institute
Tsukuba-shi, Ibaraki 350-8568 (JP)**
• **YOKOI, Kazuhito, c/o National Institute
Tsukuba-shi, Ibaraki 350-8568 (JP)**
• **KAJITA, Shuuji, c/o National Institute
Tsukuba-shi, Ibaraki 350-8568 (JP)**
• **FUJIWARA, Kiyoshi, c/o National Institute
Tsukuba-shi, Ibaraki 305-8568 (JP)**
• **HIRUKAWA, Hirohisa, c/o National Institute
Tsukuba-shi, Ibaraki 305-8568 (JP)**

(74) Representative: **Zimmermann & Partner
Postfach 33 09 20
80069 München (DE)**

(54) **METHOD AND DEVICE FOR ACCURATELY DETECTING ATTITUDE OF MOVABLE BODY**

(57)    By providing a moving body with a high-accuracy attitude detection mechanism including a pair of a first rate gyroscope for detecting the attitude of the moving body and a second rate gyroscope which obtains an output inverted from that of the first rate gyroscope and the variations in the outputs of the rate gyroscopes are mutually compensated for, thereby accurately detecting the attitude information of the moving body.

[Fig. 2]

EP 1 541 965 A1

## Description

### <Technical Field>

The present invention relates to a method and apparatus for accurately detecting the attitude of a moving body, and inparticular to a method and apparatus for accurately detecting, for example, the attitude of amovingbody which can be preferably used for measuring the attitude information such as the attitude rotation angular velocity and attitude angle of a walking robot, in order to control the stable attitude of the walking robot.

### <Background Art>

As described in Japanese Patent Laid-Open No. 2001-9772, attitude control of a moving body has been made by detecting the attitude angle of a single axis attitude of a robot main body by the use of a single rate gyroscope and a single acceleration sensor and feedback of a corresponding signal.

The attitude sensor output of a rate gyroscope or an acceleration sensor involves a temperature drift. This prevents accurate attitude control of a moving body. In particular, in case the attitude control of a moving body is made for a prolonged duration, the drift amount is remarkable so that a walking robot could fall to the ground.

A first exemplary method to solve these problems is to correct the output of an attitude sensor by using a temperature sensor.

Although the first solution is effective for a moving body equipped with a system providing stable output of a power supply to drive an attitude sensor, it cannot control the attitude of a moving body with high accuracy in case the output of the attitude sensor also varies. In particular, in the case of a lightweight and compact walking robot including a control computer, a sensor, a driving power supply and the like in a limited space in the main body, a variation in the load caused by arithmetic operation by the control computer triggers a variation in the output of the driving power supply, thereby causing a detection variation and a drift in the attitude angle. Thus, the walking robot could fall to the ground even when the output of an attitude sensor using a temperature sensor is corrected.

Another method to solve the problem of drift, as described in Japanese Patent Laid-Open No. Hei07-0218269, is to detect and correct a drift by using two differential circuits as well as a synchronization detector circuit, smoothing circuit and a phase shifter circuit.

The solution requires a complicated circuit design. The solution compensates for a drift in the sensor output and inputs the resulting output as a control signal to an attitude controller for performing control arithmetic operation and the like. This approach, however, cannot prevent occurrence of a drift as a control signal input to the attitude controller due to a variation in the driving power supply for the attitude controller, that is, a variation in the reference voltage of an analog-to-digital converter circuit.

Another solution of a problem with drift is for example a method for using a combination of a rate gyroscope and an acceleration sensor to configure an attitude angle detection algorithm such as a Kalman filter and detecting an attitude angle while correcting a drift in the output of an attitude sensor.

This approach has a problem that the drift in the output of an acceleration sensor serving to eliminate the drift in the output of a rate gyroscope is left uncorrected. Further, in an attitude detection algorithm such as a Kalman filter, correction of a static (or low-frequency range) attitude angle is made, so that it is impossible to accurately detect a dynamic (or high-frequency range) attitude angle in case a moving body is in dynamic motion. Due to such problems, a walking robot could fall to the ground even when an attitude angle is detected by an attitude angle detection algorithm such as a Kalman filter.

The invention has been accomplished in order to solve the problems. A first object of the invention is to provide a high-accuracy attitude detection method and apparatus for accurately detecting the attitude information such as the rotation angular velocity and acceleration of a moving body.

A second object of the invention is to provide a high-accuracy attitude detection method and apparatus for accurately detecting the attitude information such as the rotation angle and acceleration of a moving body even when a power supply for driving attitude detection section such as a rotation angular velocity and acceleration also serves as a power supply which drives section to perform arithmetic operation of the attitude.

### <Disclosure of the Invention>

In order to solve the above problems, especially the first problem, the invention provides a method for accurately detecting an attitude of a moving body, the moving body including a high-accuracy attitude detection mechanism having a pair of a first attitude detection section for detecting the attitude of the moving body and a second attitude detection section which provides an output inverted from that of the first attitude detection section, the method comprising the steps of: performing arithmetic processing which mutually compensates for a variation in the output of both of the attitude detection section, and accurately detecting the attitude information of the moving body.

In order to solve the above problems, the invention provides an apparatus for accurately detecting an attitude of a moving body comprising: a high-accuracy attitude detection mechanism having a pair of a first attitude detection section for detecting the attitude of the moving body and a second attitude detection section which provides an output inverted from that of the first attitude detection section, the apparatus being capable of accurately detecting the attitude information of the moving body by incorporating into the high-accuracy attitude detection mechanism an arithmetic processing feature which mutually compensates for a variation in the output of both of the attitude detection section.

According to the method and apparatus of the invention, a variation and a drift in the output of attitude detection section can be mutually compensated for by the arithmetic processing in a pair of attitude detection section forming a high-accuracy attitude detection mechanism. Even in case a temperature drift or the variation of the driving power supply for the attitude detection section is present, it is possible to configure a method and apparatus for accurately detecting the attitude of a moving body.

A specific aspect of the high-accuracy attitude detection apparatus of the invention is characterized in that the attitude detection section are rate gyroscopes, that a pair of rate gyroscopes forming a high-accuracy attitude detection mechanism is mounted on the moving body in opposite directions to each other, and that the attitude information, or to be more specific, the rotation angular velocity, attitude angle or rotation angular acceleration of the moving body is detected by a differential signal obtained from the output signals of the rate gyroscopes.

Another specific aspect of the invention is characterized in that the attitude detection section are acceleration sensors, that a pair of acceleration sensors forming a high-accuracy attitude detection mechanism is mounted on the moving body in opposite directions to each other, and that the attitude information, or to be more specific, the acceleration, translation speed, translation travel amount or attitude angle of the moving body is detected by a differential signal obtained from the output signals of the acceleration sensors.

Another specific aspect of the high-accuracy attitude detection apparatus of the invention is characterized in that the attitude detection section are inclination sensors, that a pair of inclination sensors forming a high-accuracy attitude detection mechanism is mounted on the moving body in opposite directions to each other, and that the attitude information, or to be more specific, the inclination angle, rotation angular velocity, or rotation angular acceleration of the moving body is detected by a differential signal obtained from the output signals of the inclination sensors.

Another specific aspect of the high-accuracy attitude detection apparatus of the invention is characterized in that the attitude detection section is formed by a pair of rate gyroscopes and a pair of acceleration sensors, that each of the pair of rate gyroscopes and acceleration sensors forming a high-accuracy attitude detection mechanism is mounted on the moving body in opposite directions to each other, and that the attitude information, or to be more specific, the inclination angle, rotation angular velocity, or rotation angular acceleration of the moving body is detected by of a differential signal obtained from the differential signal of output signals of the rate gyroscopes and that of output signals of the acceleration sensors.

Another specific aspect of the high-accuracy attitude detection apparatus of the invention is characterized in that the attitude detection section is formed by a pair of rate gyroscopes and a pair of inclination sensors, that each of the pair of rate gyroscopes and the pair of inclination sensors forming a high-accuracy attitude detection mechanism is mounted on the moving body in opposite directions to each other, and that the attitude information, or to be more specific, the inclination angle, rotation angular velocity, or rotation angular acceleration of the moving body is detected by a differential signal obtained from the differential signal of output signals of the rate gyroscopes and that of output signals of the inclination sensors.

In order to solve the above problems, especially the second problem, the invention provides a method for accurately detecting an attitude of a moving body, characterized in that the moving body includes a control arithmetic processing mechanism for detecting the attitude of the moving body by using the output of the attitude detection section as an input signal, and that the attitude detection section and the control arithmetic processing mechanism are driven by a common driving power supply. The invention also provides an apparatus for accurately detecting an attitude of the moving body comprising: at least a pair of moving body attitude detection section, and a control arithmetic processing mechanism for detecting the attitude of the moving body by using the output of the attitude detection section as an input signal, characterized in that the attitude detection section and the control arithmetic processing mechanism are connected to a common driving power supply.

According to the high-accuracy attitude detection method and apparatus, it is possible to mutually compensate for, using a control arithmetic processing mechanism, a variation or a drift input to the control arithmetic processing mechanism as well as a variation or drift in the output of attitude detection section. Even in the presence of a temperature drift, the variation of a driving power to feed power to the attitude detection section, or a variation or a drift in the input to the control arithmetic processing mechanism.

According to the invention, a high-accuracy attitude detection apparatus for accurately detecting an attitude of a moving body is provided, characterized in that the moving body is a walking robot.

According to the invention, it is possible to accurately detect the attitude of a walking robot, so that it is possible to control the stable attitude of a walking robot.

<Brief Description of the Drawings>

Fig. 1 is a conceptual illustration of an exemplary walking robot equipped with a first high-accuracy attitude detection mechanism of the invention;

Fig. 2 is a block diagram illustrating an exemplary specific configuration of the high-accuracy attitude detection mechanism in Fig. 1;

Fig. 3 is a block diagram illustrating another exemplary specific configuration of the high-accuracy attitude detection mechanism in Fig. 1;

Fig. 4 is a block diagram illustrating still another exemplary specific configuration of the high-accuracy attitude detection mechanism in Fig. 1;

Fig. 5 is a conceptual illustrationof an exemplarywalking robot equipped with a second high-accuracy attitude detection mechanism of the invention;

Fig. 6 is a block diagram illustrating an exemplary specific configuration of the high-accuracy attitude detection mechanism in Fig. 5;

Fig. 7 is a block diagram illustrating another exemplary specific configuration of the high-accuracy attitude detection mechanism in Fig. 5;

Fig. 8 is a conceptual illustration of an exemplary walking robot equipped with a third high-accuracy attitude detection mechanism of the invention;

Fig. 9 is a block diagram illustrating an exemplary specific configuration of the high-accuracy attitude detection mechanism in Fig. 8;

Fig. 10 is a conceptual illustration of an exemplary walking robot equipped with a fourth high-accuracy attitude detection mechanism of the invention;

Fig. 11 is a block diagram illustrating an exemplary specific configuration of the high-accuracy attitude detection mechanism in Fig. 10;

Fig. 12 is a conceptual illustration of an exemplary walking robot equipped with a fifth high-accuracy attitude detection mechanism of the invention;

Fig. 13 is a block diagram illustrating an exemplary specific configuration of the high-accuracy attitude detection mechanism in Fig. 12;

Fig. 14 is a conceptual illustration of an exemplary walking robot equipped with a sixth high-accuracy attitude detection mechanism of the invention; and

Fig. 15 is a block diagram illustrating an exemplary specific configuration of the high-accuracy attitude detection mechanism in Fig. 14.

<Best Mode for Carrying Out the Invention>

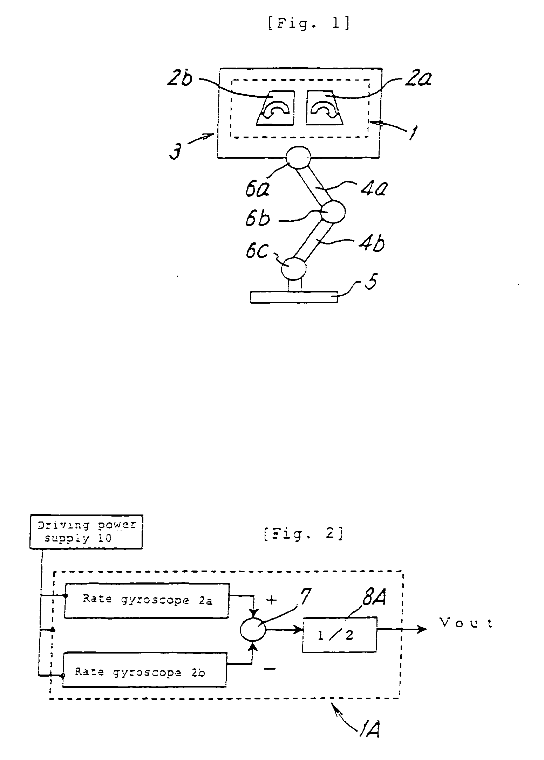

In order to describe the invention in more detail, the invention is described referring to the attached drawings. Fig. 1 is a conceptual illustration of an exemplary walking robot (moving body) equipped with a first high-accuracy attitude detection mechanism of the invention. The walking robot comprises a foot 5 at the bottom end of a leg link 4a, 4b supporting an upper body 3, which are interconnected via actuators 6a, 6b,6c. A high-accuracy attitude detection mechanism 1 provided n the upper body 3 uses rate gyroscopes 2a, 2b as attitude detection section and uses the high-accuracy attitude detection mechanism 1 to accurately detect the attitude information such as the rotation angular velocity or attitude angle of the upper body of the walking robot. The pair of rate gyroscopes 2a, 2b is provided on the moving body with the rate gyroscopes arranged in opposite directions to each other. That is, to one rate gyroscope 2a is input an inverted output from the other rate gyroscope 2b.

In this case, the output from each of the rate gyroscope 2a, 2b is respectively

$$\omega1=+\omega+\omega\text{offset}$$

$$\omega2=-\omega+\omega\text{offset}$$

where $\omega$ is the actual rotation angular velocity of the upper body 3 and $\omega$offset is a temperature drift or an output variation caused by the variation of the driving power supply to feed power to the rate gyroscopes 2a, 2b.

A high-accuracy attitude detection mechanism 1A in Fig. 2 is used to describe a case where the arithmetic processing by the high-accuracy attitude detection mechanism 1 is made using the difference between the output signals of the rate gyroscopes 2a, 2b. The high-accuracy attitude detection mechanism 1A comprises a single driving power supply 10 which drives the high-accuracy attitude detection mechanism 1A including the rate gyroscopes 2a, 2b. The high-accuracy attitude detection mechanism 1A adds (subtracts) the output signals of the rate gyroscopes 2a, 2b in an adding element 7 and compensates for the variations in the outputs then performs arithmetic processing of multiplying the result by 1/2 in a multiplying element 8A, thereby accurately detecting the rotation angular velocity of the upper body 3 of the walking robot.

In this case, the output: Vout obtained through the arithmetic processing by the high-accuracy attitude detection mechanism 1A is

$$\text{Vout}=\omega$$

and it is possible to correct the temperature drift of the rate gyroscopes 2a, 2b and the output variation ($\omega$offset) caused by the variation of the driving power supply 10 to feed power to the rate gyroscopes 2a, 2b and accurately obtain the rotation angular velocity of the upper body 3 of the walking robot.

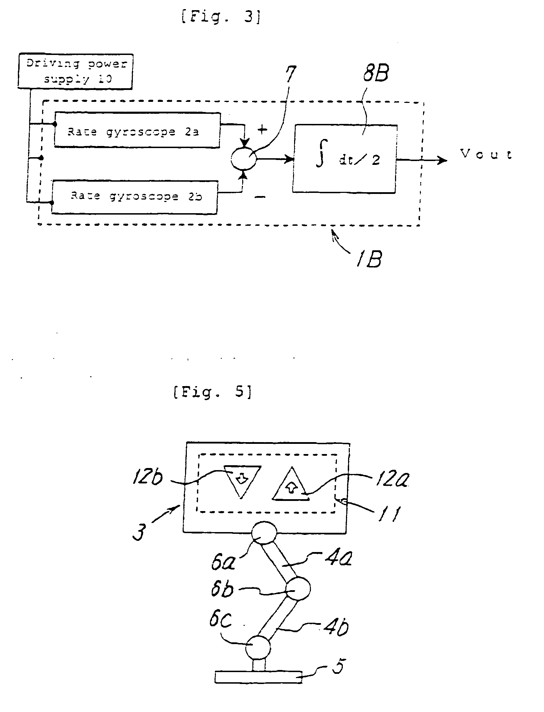

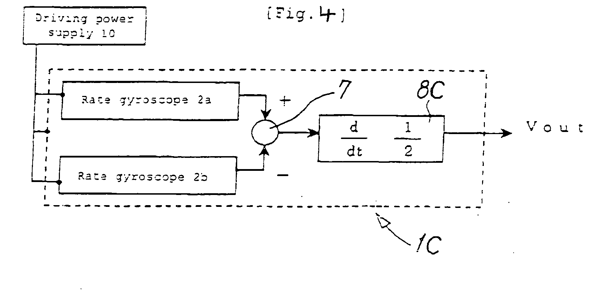

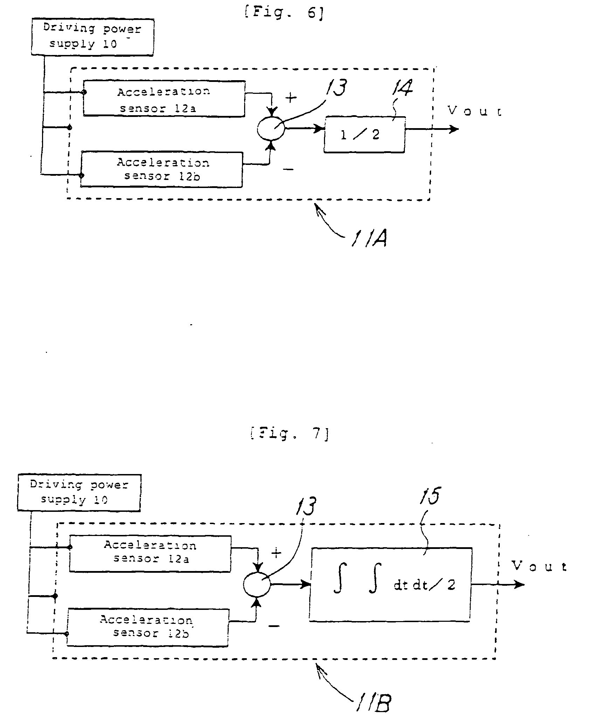

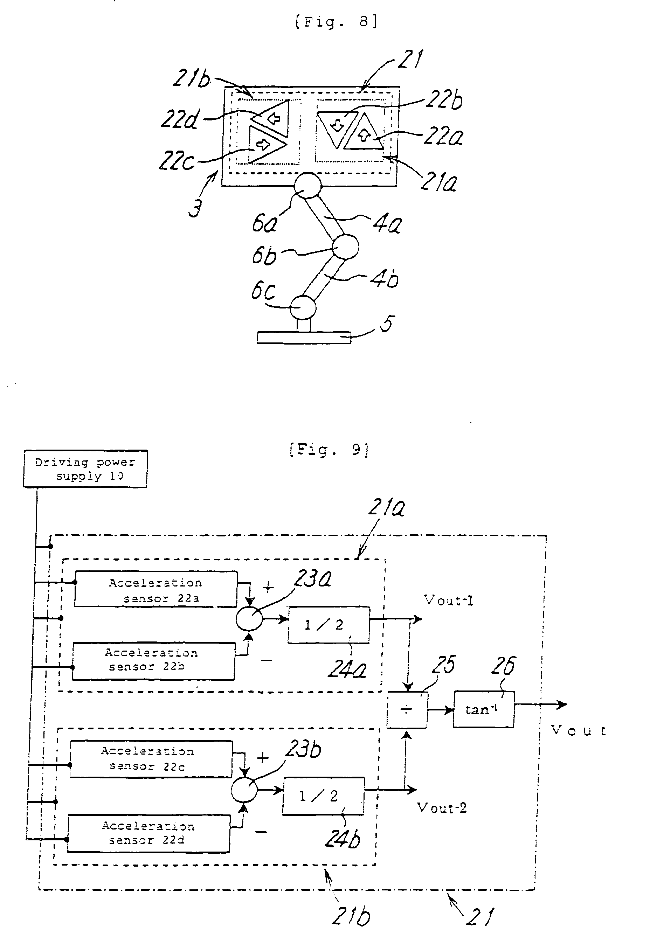

Fig. 3 shows a case where the differential signal of the output signals of the rate gyroscopes 2a, 2b is integrated as arithmetic processing by the high-accuracy attitude detection mechanism 1B used instead of the high-accuracy attitude detection mechanism 1A in Fig. 2. The high-accuracy attitude detection mechanism 1B comprises a single driving power supply 10 which drives the high-accuracy attitude detection mechanism 1B including the rate gyroscopes 2a, 2b. The high-accuracy attitude detection mechanism 1B adds (subtracts) the output signals of the rate gyroscopes 2a, 2b in an adding element 7 and compensates for the variations in the outputs then performs arithmetic processing of integration in an integrating element 8B, thereby accurately detecting the attitude angle of the upper body 3 of the walking robot.

In this case, the output: Vout obtained through the arithmetic processing by the high-accuracy attitude detection mechanism 1B is

$$Vout= \int \omega \, dt$$

and it is possible to correct the temperature drift of the rate gyroscopes 2a, 2b and the output variation ($\omega$offset) caused by the variation of the driving power supply 10 to feed power to the rate gyroscopes 2a, 2b and accurately obtain the attitude angle of the upper body 3 of the walking robot.

In case arithmetic processing of differentiation is made in a differentiating element 8C instead of the integrating element in Fig. 3, the output: Vout obtained through the arithmetic processing by the high-accuracy attitude detection mechanism 1C is differentiation result of integration of the above expression. In this case also, it is possible to correct the temperature drift of the rate gyroscopes 2a, 2b and the output variation ($\omega$offset) caused by the variation of the driving power supply 10 to feed power to the rate gyroscopes 2a, 2b and accurately obtain the rotation angular acceleration of the upper body 3 of the walking robot.

Even in case the attitude detection section in Fig. 1 is an inclination sensor, it is possible to accurately detect the attitude angle of the upper body 3 of the walking robot based on the same principle as that of the arithmetic processing by the high-accuracy attitude detection mechanism 1A in Fig. 2.

Even in case the attitude detection section in Fig. 1 is an inclination sensor, it is possible to accurately detect the rotation angular velocity or rotation angular acceleration of the upper body 3 of the walking robot based on the same principle as that of the arithmetic processing by the high-accuracy attitude detection mechanism 1C in Fig. 4.

The embodiment in Fig. 5 shows a case where a second high-accuracy attitude detection mechanism 11 is provided on the upper body 3 of the walking robot in Fig. 1. Attitude detection section in the second high-accuracy attitude detection mechanism 11 uses a pair of acceleration sensors 12a, 12b. The attitude information of the upper body 3 of the walking robot is accurately detected by the high-accuracy attitude detection mechanism 11. In the high-accuracy attitude detection mechanism 11, in particular, the pair of acceleration sensors 12a, 12b is provided with the acceleration sensors arranged in opposite directions to each other. To one acceleration sensor 12a is input an inverted output from the other acceleration sensor 12b.

The configuration of the walking robot in this embodiment is the same as that in Fig. 1 so that the corresponding portions in the figure are assigned the same signs and corresponding description is omitted. This rule also applies to the embodiments described below.

For the above embodiment, the following outputs are obtained from the acceleration sensors 12a, 12b:

$$\alpha1=+\alpha+\alpha\text{offset}$$

$$\alpha2=-\alpha+\alpha\text{offset}$$

where $\alpha$ is the actual translation acceleration of the upper body 3 and $\alpha$offset is an output variation caused by a variation in the driving power supply to feed power to the acceleration sensors 12a, 12b.

A high-accuracy attitude detection mechanism 11A in Fig. 6 is used to describe an aspect where the arithmetic processing by the high-accuracy attitude detection mechanism 11 is made using the difference between the output signals of the acceleration sensors 12a, 12b. The high-accuracy attitude detection mechanism 11A comprises a single driving power supply 10 which drives the high-accuracy attitude detection mechanism 11A including the acceleration sensors 12a, 12b. The high-accuracy attitude detection mechanism 11A adds (subtracts) the output signals of the acceleration sensors 12a, 12b in an adding element 13 and compensates for the variations in the outputs then performs arithmetic processing of multiplying the result by 1/2 in a multiplying element 14, thereby accurately detecting the translation acceleration of the upper body 3 of the walking robot.

In this case, the output: Vout obtained through the arithmetic processing by the high-accuracy attitude detection mechanism 11A is

$$Vout=\alpha$$

and it is possible to correct the temperature drift of the acceleration sensors 12a, 12 and the output variation caused by the variation of the driving power supply 10 to feed power to the acceleration sensors 12a, 12b and accurately obtain the acceleration of the upper body 3 of walking robot.

Fig. 7 shows a case where the differential signal of the output signals of the acceleration sensors 12a, 12b is integrated as arithmetic processing by the high-accuracy attitude detection mechanism 11B used instead of the high-accuracy attitude detection mechanism 11A in Fig. 6. The high-accuracy attitude detection mechanism 11B comprises a single driving power supply 10 which drives the high-accuracy attitude detection mechanism 11B including the acceleration sensors 12a, 12b. The high-accuracy attitude detection mechanism 11B adds (subtracts) the output signals of the acceleration sensors 12a, 12b in an adding element 13 and compensates for the variations in the outputs or drift then performs arithmetic processing of integration in an integrating element 15, thereby accurately detecting the translation amount of the upper body 3 of the walking robot.

In this case, the output: Vout obtained through the arithmetic processing by the high-accuracy attitude detection mechanism 11B is

$$Vout = \int \int \alpha \, dt \, dt$$

and it is possible to correct the temperature drift of the acceleration sensors 12a, 12b and the output variation caused by the variation of the driving power supply 10 to feed power to the acceleration sensors 12a, 12b and accurately obtain the translation amount of the upper body 3 of the walking robot.

In case the integrating element 15 in Fig. 7 employs a single integral instead of a double integral, the output: Vout obtained through the arithmetic processing by the high-accuracy attitude detection mechanism 11B is a single integral obtained from the double integral in the above expression. It is thus possible to correct the temperature drift of the acceleration sensors 12a, 12b and the output variation caused by the variation of the driving power supply 10 to feed power to the acceleration sensors 12a, 12b and accurately obtain the translation velocity of the upper body 3 of the walking robot.

The embodiment in Fig. 8 shows an arrangement where a pair of acceleration sensors 22a, 22b and a pair of acceleration sensors 22c, 22d are used as attitude detection section for a third high-accuracy attitude detection mechanism 21 to be provided on the upper body 3 of the walking robot in Fig. 1 and the attitude angle of the upper body 3 of the walking robot can be accurately detected by the high-accuracy attitude detection mechanisms 21a, 21b each equipped with a pair of acceleration sensors.

On the high-accuracy attitude detection mechanism 21a is provided the pair of acceleration sensors 22a, 22b with the acceleration sensors arranged in opposite directions to each other. On the high-accuracy attitude detection mechanism 2b is provided the pair of acceleration sensors 22c, 22d with the acceleration sensors arranged in opposite directions to each other. Both of the high-accuracy attitude detection mechanisms 21a, 21b are arranged orthogonally to each other to form a high-accuracy attitude detection mechanism 21.

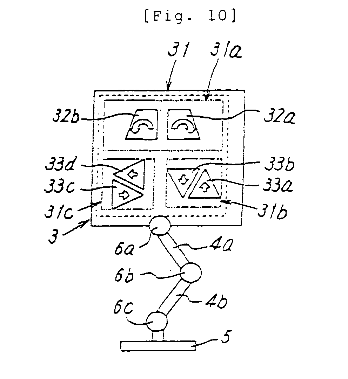

Fig. 9 explains the aspect of the arithmetic processing of the output of the acceleration sensor in the high-accuracy attitude detection mechanism 21 in Fig. 8. This arithmetic processing allows detection of the attitude angle of the upper angle 3 of the walking robot.

To be more specific, the high-accuracy attitude detection mechanism 21 comprises a single driving power supply 10 which drives the high-accuracy attitude detection mechanisms 21a, 21b including the acceleration sensors 22a through 22d. The high-accuracy attitude detection mechanism 21 adds (subtracts) the output signals of the acceleration sensors 22a, 22b respectively in adding elements 23a, 23b and compensates for the variations in the outputs or drifts then performs arithmetic processing of multiplying the result by 1/2 in multiplying elements 24a, 24b, thereby accurately detecting the acceleration signals Vout-1 and Vout-2 of the upper body 3 of the walking robot in different orientations.

In this case, the acceleration signal Vout-1 obtained from the difference between the output signals of the acceleration sensors 22a and 22b and the acceleration signal Vout-2 obtained from the difference between the output signals of the acceleration sensors 22c and 22d are respectively

$$Vout\text{-}1 = \alpha z$$

$$Vout\text{-}2 = \alpha x$$

and, from the difference, it is possible to correct the temperature drift of the acceleration sensors 22a, 22b, 22c, 22d and the output variation of the driving power supply to feed power to the acceleration sensors, thereby accurately obtaining the acceleration $\alpha z$, $\alpha x$ of the upper body of the walking robot.

The high-accuracy attitude detection mechanisms 2a, 2b are arranged orthogonally to each other so that the square root of the sum of squares of outputs of the high-accuracy attitude detection mechanisms statically matches the gravitational acceleration. In the two dimension, the arithmetic processing shown in Fig. 9, or to be more specific, the arithmetic operation of

$$\text{Attitude angle (Vout)} = \tan^{-1}(Vout\text{-}2/Vout\text{-}1)$$

by arithmetic elements 25 and 26 is used to accurately obtain the static attitude angle signal of the upper body 3 of the walking robot. It goes without saying that the attitude angle signal has undergone correction of the temperature drift of the acceleration sensors 22a, 22b, 22c, 22d and the output variation caused by the variation of the driving power supply 10 to feed power to the acceleration sensors.

The embodiment in Fig. 10 shows an arrangement where a pair of rate gyroscopes 32a, 32b and two pairs of acceleration sensors 33a, 33b and 33c, 33d are used as attitude detection section for a fourth high-accuracy attitude detection mechanism 31 to be provided on the upper body 3 of the walking robot and the attitude angle of the upper body 3 of the walking robot can be accurately detected by the high-accuracy attitude detection mechanism 31a equipped with the pair of rate gyroscopes and the high-accuracy attitude detection mechanisms 31b, 31c each equipped with the pair of acceleration sensors.

On the high-accuracy attitude detection mechanism 31b is provided the pair of acceleration sensors 33a, 33b with the acceleration sensors arranged in opposite directions to each other. On the high-accuracy attitude detection mechanism 31c is provided the pair of acceleration sensors 33c, 33d with the acceleration sensors arranged in opposite directions to each other. Both of the high-accuracy attitude detection mechanisms 31b, 31c are arranged orthogonally to each other. On the high-accuracy attitude detection mechanism 31a is provided a pair of rate gyroscopes 32a, 32b with the acceleration sensors arranged in opposite directions to each other. The high-accuracy attitude detection mechanism 31a, 31b, 31c form the high-accuracy attitude detection mechanism 31.

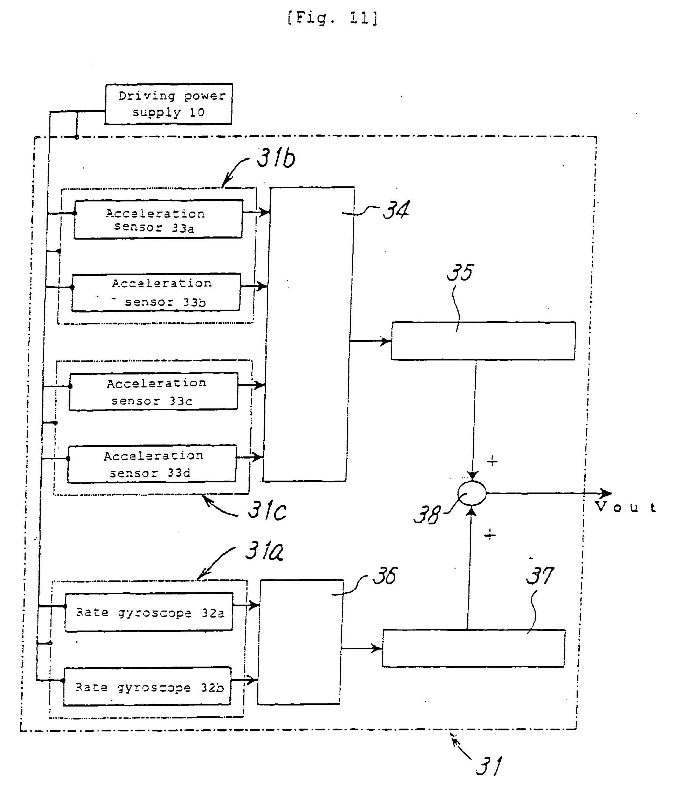

Fig. 11 explains the aspect of the arithmetic processing in the high-accuracy attitude detection mechanism 31 in Fig. 10. This arithmetic processing allows detection of the attitude angle of the upper angle 3 of the walking robot. To be more specific, an output signal of each of the acceleration sensors 33a, 33b, 33c, 33d undergoes for example the arithmetic operation explained using Fig. 9 in an arithmetic element 34 to calculate the attitude angle of the upper body 3 of the robot in a low frequency range. An output signal of each of the rate gyroscopes 32a, 32b undergoes for example the arithmetic operation explained using Fig. 3 in an arithmetic element 36 to calculate the attitude angle of the upper body 3 of the robot in a high frequency range. The attitude angles are passed through a low-pass filter 35 and a high-pass filter 37 and summed up in an adding element 38, in order to accurately detect the attitude angle of the attitude angle of the upper body of the robot.

Even in case an existing Kalman filter is configured aster a high-accuracy attitude sensor output is calculated in the above high-accuracy attitude detection mechanisms 31a, 31b, 31c, it is possible to form apparatus which accurately detects the attitude angle of the upper body of the walking robot.

Further, by adding a differentiating element to the processing in the high-accuracy attitude detection mechanism 31 in Figs. 10 and 11, it is possible to accurately detect the rotation angular velocity and rotation angular acceleration of the upper body 3 of the walking robot.

Inclination sensors can be used instead of the acceleration sensors 33a through 33d in Figs. 10 and 11. In this case also, it is possible to form apparatus which accurately detects the attitude angle of the upper body 3 of the walking robot based on the same principle as that in Fig. 11.

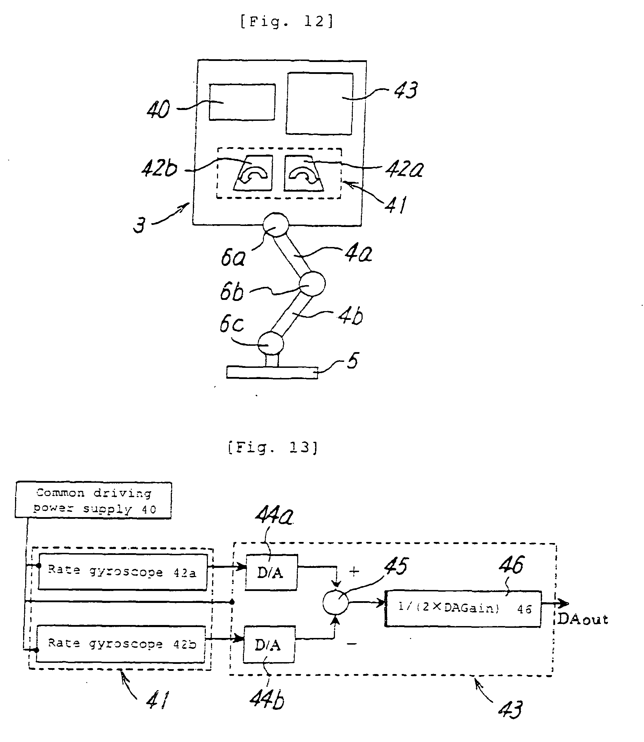

The embodiment in Fig. 12 shows an arrangement where a pair of rate gyroscopes 42a, 42b is used as attitude detection section for a fifth high-accuracy attitude detection mechanism 41 to be provided on the upper body 3 of the walking robot. Also, a control arithmetic processing mechanism 43, rate gyroscopes 42a, 42b, and a common driving power supply 40 which drives the control arithmetic processing mechanism 43 are provided. All these components are used to accurately detect the rotation angular velocity and attitude angle of the upper body 3 of the walking robot. The pair of rate gyroscope 42a, 42b is provided with the rate gyroscopes arranged in opposite directions to each other, same as the previous embodiment.

In this case, from the rate gyroscopes 42a, 42b are respectively obtained the outputs

$$\omega 1 = +\omega + \omega \text{offset}$$

$$\omega 2 = -\omega + \omega \text{offset}$$

where $\omega$ is the actual rotation angular velocity of the upper body 3 and $\omega$offset is an output variation caused by a temperature drift or a variation in the driving power supply 40 to feed power to the rate gyroscopes 22a, 22b and a control arithmetic processing mechanism 43.

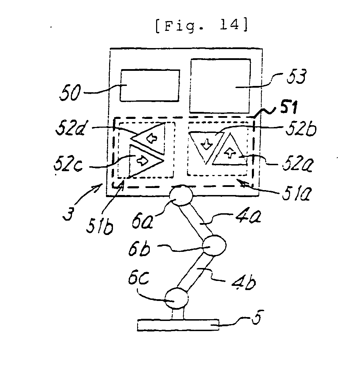

Fig. 13 explains the aspect of the arithmetic processing in the high-accuracy attitude detection mechanism 41 in Fig. 12. In this embodiment, the difference between the output signals of the rate gyroscopes 42a, 42b is used to accurately detect the rotation angular velocity of the upper body 3 of the walking robot.

To be more specific, the output signals of the rate gyroscopes 42a, 42b pass through D/A converters 44a, 44b and are added (subtracted) in an adding element 45, and then multiplied by $1/(2 \times \text{DAGain})$ in an arithmetic element 46 in order to accurately detect the rotation angular velocity of the upper body 3 of the walking robot.

Signals obtained when the outputs of the rate gyroscopes 42a, 42b are input to the control arithmetic processing mechanism 43 are respectively

$$\text{DA}\omega 1 = \text{DAGain} \times (+\omega + \omega \text{offset}) + \text{DAoffset}$$

$$\text{DA}\omega 2 = \text{DAGain} \times (-\omega + \omega \text{offset}) + \text{DAoffset}$$

where DAGain is an input gain at the control arithmetic processing mechanism 43, DA $\omega$offset is an out-

put variation which takes place at the input to the control arithmetic processing mechanism 43 due to the reference voltage variation of a DA converter caused by the variation of the common driving power supply 40.

The output: DAout obtained by the internal arithmetic operation processing by the control arithmetic processing mechanism 43 is

$$DAout=\omega$$

and it is possible to correct the temperature drift of the rate gyroscopes 42a, 42b, the variation of the driving power supply to feed power to the rate gyroscopes 42a, 42b and a variation/drift which takes place at the input of the output signals to the control arithmetic processing mechanism 43, and accurately obtain the rotation angular velocity of the upper body 3 of the walking robot.

In the walking robot in Fig. 12, the internal arithmetic processing in the control arithmetic processing mechanism 43 may include an integration feature, as shown in Fig. 3. This provides apparatus which accurately detect the attitude angle of the upper body 3 of the walking robot.

Further, the internal arithmetic processing in the control arithmetic processing mechanism 43 may include a differentiation feature as shown in Fig. 4. This provides apparatus which accurately detect the rotation angular acceleration of the upper body 3 of the walking robot.

Even in case the attitude detection section in Fig. 12 is an acceleration sensor or an inclination sensor, it is possible to configure apparatus which accurately detect the attitude information of a walking robot based on the same principle as that of the arithmetic processing by the control arithmetic processing mechanism 43 in Fig. 13.

In case the attitude detection section in Fig. 12 is an acceleration sensor and the internal arithmetic processing in the control arithmetic processing mechanism 43 includes an integration feature as shown in Fig. 7, apparatus is provided which accurately detects the translation amount and translation velocity of the upper body 3 of the walking robot.

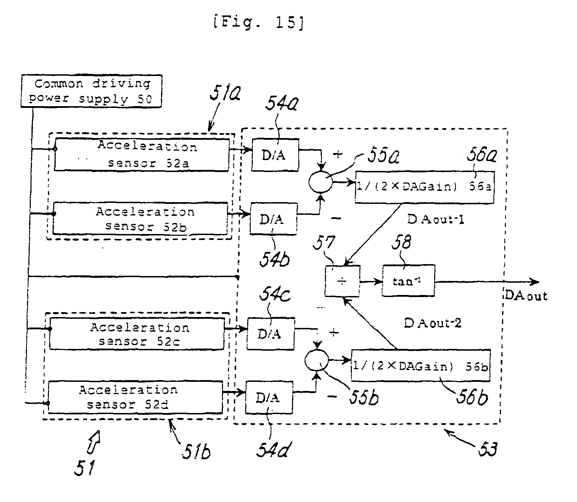

The embodiment in Fig. 14 shows an arrangement where a pair of acceleration sensors 52a, 52b and a pair of acceleration sensors 52c, 52d are used as attitude detection section for a sixth high-accuracy attitude detection mechanism 51 to be provided on the upper body 3 of the walking robot and the attitude information, to be more specific, the acceleration, translation velocity, translation amount or attitude angle of the upper body 3 of the walking robot can be accurately detected by the high-accuracy attitude detection mechanisms 51a, 51b equipped with the pairs of acceleration sensors.

To be more specific, the high-accuracy attitude detection mechanism 51 comprises the pair of acceleration sensors 52a, 52b and the pair of acceleration sensors 52c, 52d in the internal of the upper body 3 of the walking robot. It also comprises a control arithmetic processing mechanism 53 and a common driving power supply 50 which drives the acceleration sensors and the control arithmetic processing mechanism 53. The pair of acceleration sensors 52a, 52b is provided with the acceleration sensors arranged in opposite directions to each other. The pair of acceleration sensors 52c, 52d is provided with the acceleration sensors arranged in opposite directions to each other. The high-accuracy attitude detection mechanisms 51a, 51b composed of theses components are provide orthogonally to each other.

Fig. 15 explains the aspect of the arithmetic processing in the control arithmetic processing mechanism 53 in the high-accuracy attitude detection mechanism 51 in Fig. 14. In the high-accuracy attitude detection mechanism 51, the output signals of the acceleration sensors 52a, 52b are input to the control arithmetic processing mechanism 53 and the high-accuracy acceleration signal DAout-1 obtained from the difference between the signals and the output signals of the acceleration sensors 52c, 52d are input to the control arithmetic processing mechanism 53. From the high-accuracy acceleration signal DAout-2 obtained from the difference between the signals is used to accurately detect the attitude angle of the upper body 3 of the walking robot.

To be more specific, in the control arithmetic processing mechanism 53, the output signals of the acceleration sensors 52a, 52b respectively pass through D/A converters 54a, 54b and are added (subtracted) in an adding element 55a. The output signals of the acceleration sensors 52c, 52d respectively pass through D/A converters 54c, 54d and are added (subtracted) in an adding element 55b. In arithmetic element 56a, 56b, the resulting values are multiplied by $1/(2{\times}DAGain)$ to obtain the high-accuracy acceleration signals DAout-1 and DAout-2.

In this case, the high-accuracy acceleration signal DAout-1 obtained by inputting the outputs of the acceleration sensors 52a, 52b to the control arithmetic processing mechanism 53 and obtaining the difference is

$$DAout\text{-}1=\alpha z$$

and the high-accuracy acceleration signal DAout-2 obtained by inputting the outputs of the acceleration sensors 52c, 52d to the control arithmetic processing mechanism 53 and obtaining the difference is

$$DAout\text{-}2=\alpha x.$$

It is thus possible to correct the temperature drift of the acceleration sensors 52a through 52d, the variation of a driving power supply to feed power to the acceleration sensors, and the variation/drift in the control arithmetic processing mechanism 53 which is caused by the variation of the driving power supply 50 common to the acceleration sensors 52a through 52d and the control arithmetic processing mechanism 53, thereby obtaining the acceleration αz, αx of the upper body 3 of the walking robot.

The pair of acceleration sensors 52a, 52b and the pair of acceleration sensors 52c, 52d is arranged orthogonally to each other, so that the square root of the sum of squares of outputs of the high-accuracy acceleration sensor signals DAout-1 and the high-accuracy acceleration sensor signals DAout-2 operated in the control arithmetic processing mechanism 53 statically matches the gravitational acceleration. In the two dimension, the arithmetic processing shown in Fig. 15, or to be more specific, the arithmetic operation of

$$\text{Attitude angle (DAout)} = \tan^{-1}(\text{DAout-2/DAout-1})$$

by arithmetic elements 57 and 58 is used correct the temperature drift of the acceleration sensors 52a through 52d, the sensor output variation caused by the variation of a common driving power supply 50 to feed power to the acceleration sensors, and the variation/drift in the control arithmetic processing mechanism 53 which is caused by the variation of the common driving power supply 50, thereby obtaining the static attitude angle of the upper body 3 of the walking robot.

In the case of the third dimension also, it is possible to accurately obtain the static attitude angle of the walking robot by an existing calculation method.

As mentioned in detail hereinabove, according to the invention, even in the presence of a temperature drift in attitude detection section or an output variation caused of the variation of a driving power supply to feed power to the attitude detection section, the output variations in first moving body attitude detection section and second attitude detection section which obtains an output inverted from that of the first attitude detection section are mutually compensated for, which assures high-accuracy detection of the attitude information of the moving body.

Even in case a temperature drift, variation of a driving power to feed the attitude detection section, or variation/drift causedwhens signal is input to the control arithmetic mechanism is present on the attitude detection section, the first moving body attitude detection section and the second attitude detection section which obtains an output inverted from that of the first attitude detection section are provided and the attitude detection section and the control arithmetic processing mechanism are driven by a common driving power supply, which assures high-accuracy detection of the attitude of the moving body by the control arithmetic processing mechanism.

<Industrial Applicability>

As mentioned hereinabove, a method and apparatus for accurately detecting the attitude of a moving body according to the invention is suited for use in an application where the attitude information such as the attitude rotation angular velocity or attitude angle of a walking robot is accurately measured in order to assure stable control of the walking robot.

**Claims**

1. A method for accurately detecting an attitude of a moving body, the moving body including a high-accuracy attitude detection mechanism having a pair of a first attitude detection section for detecting the attitude of the moving body and a second attitude detection section which provides an output inverted from that of the first attitude detection section,

    the method comprising the steps of:

       performing arithmetic processing which mutually compensates for a variation in the output of both of the attitude detection section, and
       accurately detecting the attitude information of the moving body.

2. The method for accurately detecting an attitude of a moving body according to claim 1, wherein

       the moving body includes a control arithmetic processing mechanism for detecting the attitude of the moving body by using the output of the attitude detection section as an input signal, and
       the attitude detection section and the control arithmetic processing mechanism are driven by a common driving power supply.

3. Apparatus for accurately detecting an attitude of a moving body comprising:

       a high-accuracy attitude detection mechanism having a pair of a first attitude detection section for detecting the attitude of the moving body and a second attitude detection section which provides an output inverted from that of the first attitude detection section,
       the apparatus being capable of accurately detecting the attitude information of the moving body by incorporating into the high-accuracy attitude detection mechanism an arithmetic processing feature which mutually compensates for a variation in the output of both of the attitude detection section.

**4.** The apparatus for accurately detecting an attitude of a moving body according to claim 3, wherein

the attitude detection section are rate gyroscopes,
a pair of rate gyroscopes forming a high-accuracy attitude detection mechanism is mounted on the moving body in opposite directions to each other, and
the attitude information of the moving body is detected by a differential signal obtained from the output signals of the rate gyroscopes.

**5.** The apparatus for accurately detecting an attitude of a moving body according to claim 3, wherein

the attitude detection section are acceleration sensors,
a pair of acceleration sensors forming a high-accuracy attitude detection mechanism is mounted on the moving body in opposite directions to each other, and
the attitude information of the moving body is detected by a differential signal obtained from the output signals of the acceleration sensors.

**6.** The apparatus for accurately detecting an attitude of a moving body according to claim 3, wherein

the attitude detection section are inclination sensors,
a pair of inclination sensors forming a high-accuracy attitude detection mechanism is mounted on the moving body in opposite directions to each other, and
the attitude information of the moving body is detected by a differential signal obtained from the output signals of the inclination sensors.

**7.** The apparatus for accurately detecting an attitude of a moving body according to claim 3, wherein

the attitude detection section is formed by a pair of rate gyroscopes and a pair of acceleration sensors,
each of the pair of rate gyroscopes and acceleration sensors forming a high-accuracy attitude detection mechanism is mounted on the moving body in opposite directions to each other, and
the attitude information of the moving body is detected by a differential signal obtained from the differential signal of output signals of the rate gyroscopes and that of output signals of the acceleration sensors.

**8.** The apparatus for accurately detecting an attitude of a moving body according to claim 3, wherein

the attitude detection section is formed by a pair of rate gyroscopes and a pair of inclination sensors,
each of the pair of rate gyroscopes and the pair of inclination sensors forming a high-accuracy attitude detection mechanism is mounted on the moving body in opposite directions to each other, and
the attitude information of the moving body is detected by a differential signal obtained from the differential signal of output signals of the rate gyroscopes and that of output signals of the inclination sensors.

**9.** The apparatus for accurately detecting an attitude of a moving body according to any one of claims 3 through 8, comprising:

at least a pair of moving body attitude detection section, and
a control arithmetic processing mechanism for detecting the attitude of the moving body by using the output of the attitude detection section as an input signal, wherein
the attitude detection section and the control arithmetic processing mechanism are connected to a common driving power supply.

**10.** A high-accuracy attitude detection apparatus for accurately detecting an attitude of a moving body according to any one of claims 3 through 9, wherein the moving body is a walking robot.

[Fig. 1]

[Fig. 2]

[Fig. 3]

```
┌─────────────┐
│Driving power│
│  supply 10  │
└─────────────┘
```

```
         ┌──────────────────────┐                    8B
         │  ┌──────────────────┐ │        7    ╱
         │  │ Rate gyroscope 2a│ │   +    ┌──────────────┐
         │  └──────────────────┘ │   ╱    │              │
         │                     ⊕──────→   │ ∫  dt ╱ 2    │────→  V o u t
         │  ┌──────────────────┐ │        │              │
         │  │ Rate gyroscope 2b│ │   −    └──────────────┘
         │  └──────────────────┘ │
         └──────────────────────┘
                                            ╱1B
```

[Fig. 5]

```
        ┌─────────────────────────┐
        │   ┌─────────────────┐   │
   12b  │   │  ▽       △      │   │   12a
    ╲   │   │                 │   │   ╱
        │   └─────────────────┘   │      11
        │          3              │     ╱
        └─────────────────────────┘
                    ●  6a
                     ╲  4a
                      ●  6b
                       ╲ 4b
                        ●  6c
                        │
                   ═════╪═════  5
```

[Fig. 4]

Driving power
supply 10

Rate gyroscope 2a

Rate gyroscope 2b

+

7

−

8C

$\dfrac{d}{dt}$    $\dfrac{1}{2}$

Vout

1C

[Fig. 6]

```
Driving power
  supply 10
```

Acceleration
sensor 12a

+     /13      /14

Acceleration
sensor 12b

−

1 / 2

V o u t

11A

[Fig. 7]

```
Driving power
  supply 10
```

/13          15

Acceleration
sensor 12a

+

Acceleration
sensor 12b

−

$\int \int dt\, dt / 2$

V o u t

11B

[Fig. 8]

[Fig. 9]

[Fig. 10]

[Fig. 11]

[Fig. 12]

[Fig. 13]

[Fig. 14]

[Fig. 15]

**EP 1 541 965 A1**

## INTERNATIONAL SEARCH REPORT

| International application No. |
|---|
| PCT/JP03/09201 |

| A. CLASSIFICATION OF SUBJECT MATTER |
|---|
| Int.Cl⁷ G01C19/00, G01P9/00, G01P15/00, B25J5/00, B25J19/02 |

According to International Patent Classification (IPC) or to both national classification and IPC

| B. FIELDS SEARCHED |
|---|
| Minimum documentation searched (classification system followed by classification symbols)<br>Int.Cl⁷ G01C19/00-19/72, G01P9/00, G01P15/00, B25J5/00, B25J19/02 |

Documentation searched other than minimum documentation to the extent that such documents are included in the fields searched

| Jitsuyo Shinan Koho | 1922-1996 | Jitsuyo Shinan Toroku Koho | 1996-2003 |
|---|---|---|---|
| Kokai Jitsuyo Shinan Koho | 1971-2003 | Toroku Jitsuyo Shinan Koho | 1994-2003 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| X | JP 6-331357 A (Oyo Chishitsu Kabushiki Kaisha),<br>02 December, 1994 (02.12.94),<br>Fig. 1<br>(Family: none) | 1-10 |
| X | JP 1-156617 A (Nikon Corp.),<br>20 June, 1989 (20.06.89),<br>Fig. 1<br>(Family: none) | 1-10 |
| X | JP 6-174476 A (Clarion Co., Ltd.),<br>24 June, 1994 (24.06.94),<br>Fig. 2<br>(Family: none) | 1-10 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>12 August, 2003 (12.08.03) | Date of mailing of the international search report<br>26 August, 2003 (26.08.03) |
|---|---|
| Name and mailing address of the ISA/<br>Japanese Patent Office | Authorized officer |
| Facsimile No. | Telephone No. |

Form PCT/ISA/210 (second sheet) (July 1998)

**INTERNATIONAL SEARCH REPORT**

| International application No. |
| --- |
| PCT/JP03/09201 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X | JP 61-118612 A  (Nippondenso Co., Ltd.), 05 June, 1986 (05.06.86), Full text; all drawings (Family: none) | 1-10 |
| X | JP 2000-136929 A  (Robert Bosch GmbH.), 16 May, 2000 (16.05.00), Par. No. [0031] & DE 19850066 A1      & US 6244111 A | 1-10 |
| X | JP 9-196965 A  (Murata Mfg. Co., Ltd.), 31 July, 1997 (31.07.97), Claim 1 (Family: none) | 1-10 |
| X | JP 60-239614 A  (Yazaki Corp.), 28 November, 1985 (28.11.85), Full text; all drawings (Family: none) | 1-10 |
| A | JP 9-297028 A  (Nikon Corp.), 18 November, 1997 (18.11.97), Par. No. [0004]; the last sentence in this paragraph (Family: none) | 2,9 |
| A | JP 10-239064 A  (Matsushita Electric Industrial Co., Ltd.), 11 September, 1998 (11.09.98), Fig. 2 (Family: none) | 2,7-9 |
| A | JP 2001-9772 A  (Canon Inc.), 16 January, 2001 (16.01.01), Full text; all drawings (Family: none) | 2,7-8,10 |

Form PCT/ISA/210 (continuation of second sheet) (July 1998)